# EUROPEAN PATENT SPECIFICATION

(11) **EP 2 101 315 B1**
(45) Date of publication and mention of the grant of the patent: **28.10.2009**
(21) Application number: 08157827.0
(22) Date of filing: 09.06.2008
(51) Int. Cl.: G10K 11/00, G10K 11/165, C08K 3/08

(54) **Thermoplastic resin composition with improved acoustic properties**
Thermoplastische Harzzusammensetzung mit verbesserten akustischen Eigenschaften
Composition de résine thermoplastique à propriétés acoustiques améliorées

(30) Priority: 10.03.2008 IT MI20080040
(43) Date of publication of application: 16.09.2009
(73) Proprietor: LATI Industria Termoplastici S.p.A., 21040 Vedano Olona (Varese) (IT)
(72) Inventor: Manarini, Francesco, 20157 Milan (IT); Mercante, Loredana, 21040 Uboldo (VA) (IT); Zanasca, Rinaldo, 21100 Varese (IT)
(74) Representative: Pistolesi, Roberto

(56) References cited:
- US-A1- 2005 001 517
- US-A1- 2005 275 313
- US-A1- 2006 079 785
- US-A1- 2008 098 816
- GREWE M G ET AL: "ACOUSTIC PROPERTIES OF PARTICLE/POLYMER COMPOSITES FOR ULTRASONIC TRANSDUCER BACKING APPLICATIONS" IEEE TRANSACTIONS ON ULTRASONICS, FERROELECTRICS ANDFREQUENCY CONTROL, IEEE SERVICE CENTER, PISCATAWAY, NJ, US, vol. 37, no. 6, 1 November 1990 (1990-11-01), pages 506-513, XP000168480 ISSN: 0885-3010
- GREWE M G ET AL: "Acoustic properties of particle/polymer composites for transducer backing applications" 19891003; 19891003 - 19891006, 3 October 1989 (1989-10-03), pages 713-716, XP010090716

## Description

The present invention relates to a thermoplastic polymer mixture which can be processed by means of the common processing methods used for these materials (extrusion, moulding, etc.). Said mixture has an improved acoustic impedance and attenuation behaviour, particularly with regard to mechanical waves in the ultrasound frequency range. The present invention is used for the manufacture of acoustic backings in general and in particular for acoustic backings of ultrasound transducers, for example ecographic probes, NDT (nondestructive test) transducers, SAW (surface acoustic wave) sensors, etc.

The mixture is composed of:
- at least one polyamide A in a quantity of between 2% and 75% by weight;
- at least one densifying agent B in a quantity of between 15% and 95% by weight, said agent being selected from metal oxides, ferrites and metallic powders;
- at least one modifying agent C in a quantity of between 2% and 60% by weight, said agent being selected from non-conjugated ethylene/propylene/diene elastomers;
- fillers and/or reinforcing agents D in a quantity of between 0% and 60% by weight;
- process auxiliaries E in a quantity of between 0% and 10% by weight.

### State of the art

The present invention relates to the formulation of thermoplastic compositions with improved and specific acoustic properties; these compositions are intended for applications in sectors where particular acoustic absorption and acoustic impedance requirements exist. An example of application is that of acoustic transducers, in particular for the backing of ultrasound acoustic transducers, which are used in various sectors (medical, naval, materials analysis, telecommunications and other sectors). Where the term "backing" occurs it is understood as meaning a solid mass, of suitable geometry, on which the piezoelectric component is mounted; when this component is excited by a voltage pulse, the oscillation is dampened and the reduction in the amplitude between successive oscillations depends on the material with which the component is combined. This base must therefore have particular acoustic properties in terms of impedance and absorption in order to obtain the desired level of attenuation.

The composition is formed on a polymer matrix in which suitable additives, fillers and modifiers able to provide the desired level of impedance and high acoustic attenuation are dispersed.

The undoubted advantage consists in the fact of being able to obtain directly the part, intended for example to form a backing for an acoustic transducer, by means of simple injection-moulding of the composition, without necessarily performing further processing operations. By means of this invention it is possible to simplify and accelerate the production process reducing the associated costs and increasing its productivity. However, where necessary, it is possible to perform, without any difficulty, also surface-finishing and further tool-machining of the moulded part.

At present the procedures for obtaining the backing envisage either the use of thermosetting resins or the use of semi-finished products from which the finished part is obtained with the aid of machine tools. As is known, thermosetting resins must be prepared by mixing the components and envisage hardening processes which are characteristic of the technologies used for processing these products. These processing technologies do not ensure a high degree of reproducibility during mass-production owing to be limited control over dispersion of the components within the thermosetting resins and sedimentation of the additives.

In addition to these disadvantages of a practical nature for production of these parts there exist other drawbacks of a purely technical nature. The use of a thermoplastic compound allows optimization of the formulation to be achieved by means of suitable fillers and reinforcing agents in order to improve also the thermal resistance and mechanical strength properties. The mechanical contractions, due to the cyclical oscillation of the piezoelectric part which is generally made of ceramic material (the electric energy being converted into a mechanical/sound wave) and with which the backing and thus the energy dissipated in the form of sound wave heat come into contact, may produce failures in the backing, resulting in an impaired and poor performance of the transducer. The operating temperature in some cases reached by the transducers may also adversely affect the performance of the backing and therefore the output of the entire transducer.

By means of the present invention it is possible to eliminate or at least limit some of the abovementioned drawbacks of the known compositions. With said invention it is possible to obtain a composition with excellent acoustic properties and high wave - in particular ultrasound wave - attentuation levels. In connection with ultrasound transducers, a backing material is on average considered to be satisfactory if it allows absorption of 6-10 dB/mm at 5 MHz. As a result of the present invention it is possible to obtain up to and beyond 11 dB/mm at 2 MHz, which is a medium/low frequency level in the ultrasound range. Since, as known, the lower the frequency the more difficult it is to dampen the wave, being able to obtain in this way already high dissipation at low frequencies means having a material which is even more efficient at higher frequencies. Such an efficiency therefore also allows the use thereof for small transducers where there are space-related problems and there is a need for backing with a very small thickness.

Finally, unless a formulation with very high percentage amounts of electrically conductive densifying filler is used, it is possible to maintain a fairly high level of electrical resistivity.

According to the available literature the material to be used for forming the backing of transducers must have a high attenuation coefficient and an acoustic impedance which satisfies the constructional requirements of the transducer. Certain polymer materials, which are intended for this use, may be obtained by mixing in the matrix metallic, ceramic or vitreous particles which result in a high acoustic impedance of the material. However, the overall level of attenuation still remains very low.

Elastomers, for their part, have a high acoustic attenuation, but inferior thermal and mechanical properties, which are essential for the production of the backing.

The innovation according to the present invention consists in combining in a single product all the acoustic, electrical, mechanical and thermal properties required by an application for acoustic backings, achieving also a processability and a composition which is simpler and less costly than the existing solutions, owing to the use of an injectable or extrudable thermoplastic compound.

### Description of the invention

The present invention therefore consists in a thermoplastic composition based on at least one thermoplastic polymer, referred to hereinbelow as component A, mixed with a densifying agent, referred to hereinbelow as component B.

Optionally, the mixture may contain one or more of the following components:
- a suitable modifying elastomer (component C); and/or
- fillers and/or reinforcing agents (component D); and/or
- process auxiliaries (component E)

In greater detail, the composition according to the present invention is composed of:
A: at least one polyamide in a quantity of between 2% and 75% by weight;
B: at least one densifying agent in a quantity of between 15% and 95% by weight, selected from metal oxides, ferrites and metal powders ;
C: at least one modifying agent in a quantity of between 2% and 60% by weight, selected from non-conjugated ethylene / propylene/diene elastomers;
D: fillers and/or reinforcing agents in a quantity of between 0% and 60% by weight;
E: process auxiliaries in a quantity of between 0% and 10% by weight,
where the percentages by weight refer to the weight of the thermoplastic composition (i.e. where the percentage sum of the components A+B+C+D+E is 100).

Preferably, said at least one polyamide A is present in percentage amounts ranging between 3% and 50% by weight; said at least one densifying agent B is present in percentage amounts of between 75% and 85% by weight; said at least one modifying agent C is present in percentage amounts of between 2% and 15% by weight; said fillers and reinforcing agents D are present in percentage amounts of between 0% and 25% by weight; said process auxiliaries E are present in percentage amounts of between 0% and 5% by weight.

On the basis of the applicational requirements and the desired acoustic properties, it is possible to mix more than one type of the same component (for example two or more densifying agents) or dispense with one or more components (for example the component D where there are no particular thermal or mechanical requirements).

The composition is prepared by means of a homogeneous combination of all or some of the abovementioned components in the matrix. The choice as to the correct percentages and the type of component depends most importantly on the mechanical, electrical (resistivity) and thermal resistance requirements, but in particular it depends on the acoustic requirements of the specific applicational environment. The acoustic properties (in particular attenuation and acoustic impedance) depend mainly on the local density as well as on the correct choice of the percentage and type of modifying agent used.

The choice of the correct matrix is instead associated with the thermal and mechanical properties of the backing and the actual process requirements.

### Component A

The component A is a polyamide (such as for example those commercially available as Ultramid^{®} , Radipol^{®}, Technyl ^{®}, Zytel^{®}).

The mixture comprises between 2% and 75% by weight of the component A.

### Component B

"Densifying agent" is understood as meaning a filler in the form of powder, flakes, etc., to be added to the thermoplastic matrix, having a density which is markedly different from that of the matrix and such as to cause a significant variation in the density of the final composition. The densifying agent may be of the ceramic/mineral type (metal oxides, etc.), or ceramic/metal type (ferrites, metallic powders, etc.). The particle size of the particles may range between 0.01 and 500 µm. Depending on the application it is possible to choose the correct particle size or a combination of different particle sizes.

Metal oxides are preferably selected from among those which have elements belonging to group II and IV of the periodic table, and to transition metals, of groups Ib, IIb and IIIb, IVb, Vb. The oxides may be exactly stoichiometric or with a variable stoichiometry, mixed oxides and in the various oxidation and hydration states. In particular, the oxides of Fe, Zn, Mg, Ti, W, Pb, Cr, Sb, Sn, Bi, Al.

The ferrites are preferably selected from among those containing the elements of Ba, Fe, Sr, with magnetic and paramagnetic properties, which may or may not have undergone different heat treatments.

The metal powders are those obtained by means of machining of the metals belonging to the groups listed above having particle sizes preferably ranging between 10 µm and 200 µm, with a preferably monodisperse particle size distribution.

The preferred metal powders are selected from among Fe, Zn, Mg, Ti, W, Pb, Cr, Sb, Sn, Bi, Al.

The mixture may comprise between 15% and 95% by weight of the component B. According to a preferred aspect of the invention, the component B is tungsten (W) in powder form.

The correct percentage of the component B is related to that of the component C (modifying agent) and is crucial for obtaining the desired acoustic properties.

### Component C

"Modifying agent" is understood as referring to substituted for the same component A, therefore forming the basis of the composition.

An ethylene/propylene/diene elastomer which is non-conjugated (or a chemically related compound), even more preferably modified with maleic anhydride (such as those which are commercially available as Royaltuf^{®} 498, Exxelor^{®} VA 1801, Exxelor^{®} VA 1803, Fusabond^{®} MN 493D).

The general use of the component C envisages quantified metering of between 2% and 60% by weight of the compound. In the specific case of the ultrasound range a percentage amount of between 2% and 15% by weight is preferable.

### Component D

"Filler and/or reinforcing agents" are understood as being generally inert compounds which have the function of improving the mechanical strength and thermal resistance properties. Examples are carbon fibres, glass fibres, amorphous silica, asbestos, calcium silicate, calcium metasilicate, magnesium carbonate, kaolin, gypsum, quartz powder, mica, barium sulphate and feldspars. Fibrous fillers which may be in the form of fibres of glass, carbon, aramide and potassium are preferable, with particular preference for type E glass fibres. Roving or chopped strand forms may be used. The fibrous fillers may be pre-treated superficially with silane compounds in order to improve the adhesion to the thermoplastic matrix.

Silane compounds may have the formula

(X-(CH₂)ₙ)ₖ-Si-(O-CₘH₂ₘ₊₁) _{4 -k}

where
X is -NH₂ , 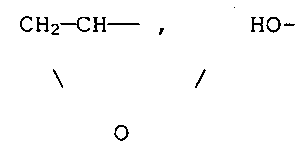 n is a whole number from 2 to 10, preferably 3 or 4;
m is a whole number from 1 to 5, preferably 1 or 2;
k is a whole number from 1 to 3, preferably 1.

Examples of preferred silane compounds are aminopropyl-methoxysilane, aminobutyltrimethyoxysilane, aminobutyltriethoxysilane and also the corresponding silanes containing the glycidyl group as the substituent X.

The percentage of silane compounds generally used for the surface treatments is between 0.05 and 5% by weight, preferably between 0.5 and 1.5% by weight, and in particular between 0.8 and 1.1% by weight.

Acicular mineral fillers may also be used. An example is acicular wollastonite. Mineral fillers must have a form ratio (L/D) possibly between 8:1 and 35:1, and preferably between 8:1 and 11:1. The mineral fillers may, if necessary, be pre-treated with the abovementioned silane compounds, but this pre-treatment is not indispensable.

Other examples of a reinforcing agent or filler, such as kaolin, calcinated kaolin, wollastonite, talc and gypsum, may be mentioned.

According to a preferred aspect of the invention, the component D is a glass fibre.

The percentage of this component D ranges between 0% and 60% by weight.

However, the choice of the correct reinforcing agent and the correct percentage to be introduced is a consequence of the thermal and mechanical requirements of the compound in the operating conditions.

### Component E

The term "process auxiliaries" is understood as meaning compounds which have the function of stabilizing the processing, moulding and operating resistance of the composition: these consist mainly of oxidation inhibitors (additives resulting from decomposition due to exposure to the heat or ultraviolet rays), lubricants, release agents, dyes (pigments or soluble agents), nucleating agents, plasticizers, etc.

By way of example, the oxidation inhibitors and thermal stabilizers may be sterically hindered phenols and/or phosphites, hydroquinones, or secondary aromatic amines. This group represents the differently substituted diphenylamines and mixtures of these in a concentration of up to 1% by weight, depending on the thermoplastic matrix used.

UV stabilizers are those commonly used in thermoplastic resins up to 2% by weight and are substituted groups belonging to resorcinols, salicylates, benzotriazoles and benzophenones.

The dyes may be inorganic pigments, for example titanium dioxide, ultramarine blue, iron oxides or carbon black, and also organic pigments, such as phthalocyanines, quinacridones and terylenes and also soluble dyes such as nigrosines and anthraquinones.

Examples of nucleating agents which may be used are sodium phenyl phosphinate, alumina, silica and similar compounds.

Lubricants and release agents are used in percentages of up to 1% by weight and are preferably long chains of fatty acids (for example stearic or palmitic acid), salts of the latter (for example calcium stearate and zinc stearate) or montan waxes (mixtures of saturated short chains of carboxylic acids having a chain with a length of between 28 and 32 carbon atoms), calcium or sodium montanate and also polyethylene or polypropylene waxes with a low molecular weight.

Examples of plasticizers which may be mentioned are dioctyl phthalate, dibenzyl phthalate, butyl benzyl phthalate, hydrocarbon oils and butylbenzenesulphonamide.

The percentages of these process auxiliaries range between 0% and 10%; the appropriate quantities are determined in each case, on the basis of the general common knowledge in this specific technical field, in order to improve the processing, moulding and operating resistance of the composition. Where they are not necessary, it is also possible not to use them.

According to a preferred feature of the invention, the component E is a mixture of calcium stearate and a sterically hindered phenol, preferably in a weight ratio of about 1:1; the sterically hindered phenol which is most preferred is N,N'-hexane-1,6-diylbis(3-(3,5-di-tert-butyl-4-hydroxyphenylpropionamide)), commonly commercially available as Irganox^{®} 1098.

### Tests

The present invention relates to the manufacture of a thermoplastic composite with improved acoustic properties (absorption and acoustic impedance). This material may be used in various areas, for example for the manufacture of acoustic backings in general, by making due modifications to the formulation depending on the specific acoustic mechanical strength and thermal resistance requirements during operation and if necessary after processing.

By way of example the tests relating to an application for the backings of ultrasound transducers are described. The requirements in this specific case are as follows:
- optimum properties for absorption of the ultrasound waves (roughly between 0.5 MHz and 100 MHz). The target value in general must be at least 6 dB/mm at 5 MHz. The greater the attenuation the greater is the possibility of using the material for backings with very thin thicknesses;
- generally an impedance of about 3 Mrayl to 8-10 Mrayl, depending on the acoustic impedance of the active component chosen for the transducer to be manufactured and its particular application;
- high electrical resistivity;
- good acoustic and mechanical strength properties at temperatures of up to 70-100°C.

For comparative purposes the data is shown in comparison with a solution currently used in this context, consisting of a vulcanized elastomer containing 90% barium ferrite (BaFe₁₂O₁₉), subsequently machined from bars and sheets. This material, although it has produced satisfactory results from the point of view of acoustic properties, does not have an adequate mechanical strength, in particular at high temperatures, resulting in failure and malfunctioning of the transducer. Four formulations based on the present invention and obtained by means of injection-moulding are shown by way of comparison

All the test formulations were obtained by means of extrusion of the formulation performed on a co-rotating twin-screw Leistritz extrusion plant, with screw diameters of 27 mm and an L/D ratio of 48. Screw rotation was set at 250 rpm such as to have use equal to 30% of the maximum permissible rotational torque of the plant. The overall throughput of the extruder was set to 23 kg/h in order to obtain a recorded pressure at the extruder head of about 25 bar. The thermal profile was set so as to ensure optimum fusion of the matrix and dispersion of the components introduced.

A suitable system for cooling the extruded (string-like) mass and a granulation cutting system were positioned downstream of the extruder head.

The granulated product was treated using common procedures for processing thermoplastic material, with drying if required by the resin, producing characterization test pieces by means of injection-moulding carried out on a Battenfeld BA 950 CDK plant with a closing force of 90 tonnes and with moulding conditions commonly applied depending on the nature of the polymer forming the matrix of the composition. The test pieces before being used for the characterization tests were suitably prepared in a climatic chamber in accordance with the standard ASTM D 618.

Some formulations were prepared in order to reach the required target values. In this connection only the data relating to the formulations of greatest interest for the specific application are shown.

The vulcanized rubber with 90% ferrite, which was used as reference material, is indicated by "REF". The formulations based on the present invention are indicated by X,Y,Z,W. The compositions are those shown in Table 1.

**Table 1**

| | | X | Y | Z | W |
|---|---|---|---|---|---|
| A | Base resin | 12.00% | 5% | 7.00% | 7.50% |
| B | Densifying agent | 80% | 80% | 80% | 80% |
| C | Modifying agent | 7.50% | 10% | 7.50% | 7.50% |
| D | Reinforcing agent | 0% | 5% | 5% | 5% |
| E | Process auxiliaries | 0.5% | 0% | 0.5% | 0% |

In the specific case, the components of the present formulations are as follows:
A (base resin): PA6 (X,Y,Z) (Ultramid^{®} B27 E with relative viscosity number of 2.6), PA66 (Ultramid ^{®} A 27 E 01 with viscosity number of 2.6) (W).
B (densifying agent): tungsten in powder form (X,Y,Z,W).
C (modifying agent): non-conjugated ethylene/propylene/diene elastomer modified with maleic anhydride (Royaltuf 498) (X,Y,Z,W).
D (reinforcing agent): glass fibres.
E (process auxiliaries): mixture of sterically hindered phenol (Irganox 1098) and calcium stearate in a ratio of 1:2.

As regards the physical, thermal and mechanical properties, the data is shown in Table 2 in comparison with the reference material. The mechanical tests relate to bending stress tests.

**Table 2**

| | | | REF. | X | Y | Z | W |
|---|---|---|---|---|---|---|---|
| Density | ISO 1183 | g/cc | 3.65 | 3.92 | 4.24 | 4.39 | 4.6 |
| HDT | ISO 75 | °C | 42 at 0.45MPa | 109 at 0.45MPa | 49 at 0.45MPa | 178 at 0.45MPa | 227 at 0.45MPa |
| | | | 35 at 1.82MPa | 56 at 1.82MPa | 36 at 1.82MPa | 70 at 1.82MPa | 95 at 1.82MPa |
| Resistivity vol. | ASTM D257 | Ω*CM | 83*10^9 | 18*10^11 | 18*10^11 | 18*10^11 | 1.6*10^14 |
| Shore D | ISO 868 | - | 64 | 72 | 56 | 70 | 70 |
| Flexural | | MPa | 450 at 25°C | 1200 at 25°C | 160 at 25°C | 2000 at 25°C | 2300 at 25°C |
| modulus | | | 100 at 50°C | 380 at 50°C | 98 at 50°C | 500 at 50°C | 1755 at 50°C |
| Yield point | ISO 178 | | 6 at 25°C | 30 at 25°C | 6.5 at 25°C | 27 at 25°C | 24 at 25°C |
| | | MPa | 3.5 at 50°C | 16 at 50°C | 5.5 at 50°C | 18 at 50°C | 16 at 50°C |
| Breaking load | | MPa | 1.5 at 25°C | | | 26 at 25°C | 19 at 25°C |
| | | | 1.2 at 50°C | | | 15 at 50°C | 16 at 50°C |
| | | mm | 5 at 25°C | 6 at 25°C | 6 at 25°C | 5 at 25°C | 2.2 at 25°C |
| Yield sag | | | 5 at 50°C | 6.4 at 50°C | 6 at 50°C | 6 at 50°C | 2.4 at 50°C |
| Breakage sag | | mm | 7.8 at 25°C | | | 9 at 25°C | 4.1 at 25°C |
| | | | 5.8 at 50°C | | | 11 at 50°C | 4.3 at 50°C |

The most significant acoustic parameters which characterize a material to be used for the backing are the acoustic impedance and attenuation.

The acoustic impedance *Z* is defined as the product of density ρ times the speed of sound in the propagation medium and is the most important parameter during passage of an acoustic wave through the interface between two different media. In the specific case examined too high or too low impedance levels are not recommended. A value considered to be satisfactory lies between 4 and 8 MRayl. Different applications or applications in different frequency ranges could require other impedance values, which can be obtained by means of suitable formulations, while remaining within the scope of the present invention.

The attenuation is defined as the loss of acoustic energy by the sound beam during propagation and is mainly due to two phenomena: scattering (Rayleigh, diffusion) and absorption (thermal effect, anelastic hysteresis, relaxation, transformation at a molecular level in general).

In the example examined of a backing for ultrasound transducers, a good attenuation value may be regarded as being 6-7 dB/mm at 5 MHz; however, a higher absorption is nevertheless preferable since it could allow the use of the material also at smaller thicknesses should there be space-related problems.

Table 3 shows the data relating to acoustic impedance and to attenuation at 5 MHz and 2MHz (for samples with a higher attenuation), compared to the reference material.

**Table 3**

| | | REF. | X | Y | Z | W |
|---|---|---|---|---|---|---|
| Attenuation | dB/mm | 6 at 5MHz | >5 at 5MHz | >5 at 5MHz | 11.6 at 2MHz | 11 at 2MHz |
| Impedance | Mrayl | 7.8 | 4.9 | 3.7 | 5.2 | 5.1 |

From the present results of the tests it can be seen that some formulations (in particular Z and W) have acoustic properties, in particular as regards attenuation, which are decidedly superior compared to the reference material. The thermal and mechanical data, moreover, have properties both at ambient temperature and at 50°C which are far superior to those of the reference material; this helps solve the problems relating to failure affecting the reference material. Moreover, although the samples according to the present invention are such that they may easily undergo also subsequent processing or machine-tool finishing, it is possible to use the thermoplastic composition in order to obtain injection-moulded parts, accelerating, facilitating and reducing the cost of the process for obtaining the manufactured article or semi-finished product.

## Claims

1. A thermoplastic composition comprising:
- at least one polyamide A in a quantity of between 2% and 75% by weight;
- at least one densifying agent B in a quantity of between 15% and 95% by weight, said agent being selected from metal oxides, ferrites and metallic powders;
- at least one modifying agent C in a quantity of between 2% and 60% by weight, said agent being selected from non-conjugated ethylene/propylene/diene elastomers;
- fillers and/or reinforcing agents D in a quantity of between 0% and 60% by weight;
- process auxiliaries E in a quantity of between 0% and 10% by weight.

2. A thermoplastic composition according to Claim 1, **characterized in that** said polyamide A is present in percentage amounts of between 3% and 50% by weight.

3. A thermoplastic composition according to Claim 1, **characterized in that** said at least one densifying agent B is present in percentage amounts of between 75% and 85% by weight.

4. A thermoplastic composition according to Claim 1, **characterized in that** said at least one modifying agent C is present in percentage amounts of between 2% and 15% by weight.

5. A thermoplastic composition according to Claim 1, **characterized in that** said fillers and/or reinforcing agents D are present in percentage amounts of between 0% and 25% by weight.

6. A thermoplastic composition according to Claim 1, **characterized in that** said process auxiliaries E are present in percentage amounts of between 0% and 5% by weight.

7. A thermoplastic composition according to Claim 1, having the following composition by weight: component A 12.00±1.0%, component B 80±5.0%, component C 7.50±1.0%, component D 0.5±0.1%.

8. A thermoplastic composition according to Claim 1, having the following composition by weight: component A 5.0±0.5%, component B 80±5.0%, component C 10±1.0%, component D 5.0±0.5%.

9. A thermoplastic composition according to Claim 1, having the following composition by weight: component A 7.0±1.0%, component B 80±5.0%, component C 7.50±1.0%, component D 5.0±0.5%, component E 0.5±0.1%.

10. A thermoplastic composition according to Claim 1, having the following composition by weight: component A 7.50±1.0%, component B 80±5.0%, component C 7.50±1.0%, component D 5.0±0.5%.

11. A thermoplastic composition according to one of the preceding claims, **characterized in that** said densifying agent B is selected from
- metal oxides selected from among those which have elements belonging to group II and IV of the periodic table, and to transition metals of groups Ib, IIb and IIIb, IVb, Vb;
- ferrites selected from among those containing the elements of Ba, Fe, Sr, with magnetic and paramagnetic properties; and
- metallic powders selected from metals belonging group II and IV of the periodic table, and to transition metals of groups Ib, IIb and IIIb, IVb, Vb among Fe, Zn, Mg, Ti, W, Pb, Cr, Sb, Sn, Bi, Al.

12. A thermoplastic composition according to one of the preceding claims, **characterized in that** said densifying agent B is selected from
- metal oxides selected from oxides of Fe, Zn, Mg, Ti, W, Pb, Cr, Sb, Sn, Bi, Al; and
- metallic powders selected from among Fe, Zn, Mg, Ti, W, Pb, Cr, Sb, Sn, Bi, Al.

13. A thermoplastic composition according to one of the preceding claims, **characterized in that** said densifying agent B is tungsten in powder form.

14. A thermoplastic composition according to one of the preceding claims, **characterized in that** said modifying agent C is a non-conjugated ethylene/propylene/diene elastomer modified with maleic anhydride.

15. A thermoplastic composition according to one of the preceding claims, **characterized in that** said filler and/or reinforcing agent D is glass fibre.

16. A thermoplastic composition according to one of the preceding claims, **characterized in that** said process auxiliary E is a mixture of calcium stearate and a sterically hindered phenol.

17. Use of a thermoplastic composition according to one of Claims 1-15 for the preparation of acoustic transducers.

18. Use of a thermoplastic composition according to one of Claims 1-15 for the preparation of acoustic backings.

19. Use of a thermoplastic composition according to one of Claims 1-15 for the preparation of backings for ultrasound acoustic transducers.

## Patentansprüche

1. Thermoplastische Zusammensetzung, umfassend:
- wenigstens ein Polyamid A in einer Menge zwischen 2 Gew.-% und 75 Gew.-%;
- wenigstens ein Verdichtungsmittel B in einer Menge zwischen 15 Gew.-% und 95 Gew,-%, wobei das Mittel ausgewählt ist aus Metalloxiden, Ferriten und Metallpulvern;
- wenigstens ein Modifizierungsmittel C in einer Menge zwischen 2 Gew.-% und 60 Gew.-%, wobei das Mittel ausgewählt ist aus nicht-konjugierten Ethylen/Propylen/Dien-Elastomeren;
- Füllstoffe und/oder Verstärkungsmittel D in einer Menge zwischen 0 Gew,-% und 60 Gew.-%;
- Verfahrenshilfsstoffe E in einer Menge zwischen 0 Gew.-% und 10 Gew.-%.

2. Thermoplastische Zusammensetzung nach Anspruch 1, **dadurch gekennzeichnet, dass** das genannte Polyamid A in prozentualen Mengen zwischen 3 Gew.-% und 50 Gew.-% vorliegt.

3. Thermoplastische Zusammensetzung nach Anspruch 1, **dadurch gekennzeichnet, dass** das genannte wenigstens eine Verdichtungsmittel B in prozentualen Mengen zwischen 75 Gew.-% und 85 Gew.-% vorliegt.

4. Thermoplastische Zusammensetzung nach Anspruch 1, **dadurch gekennzeichnet, dass** das genannte wenigstens eine Modifizierungsmittel C in prozentualen Mengen zwischen 2 Ges.-% und 15 Gew.-% vorliegt.

5. Thermoplastische Zusammensetzung nach Anspruch 1, **dadurch gekennzeichnet, dass** die genannten Füllstoffe und/oder Verstärkungsmittel D in prozentualen Mengen zwischen 0 Gew.-% und 25 Gew.-% vorliegen.

6. Thermoplastische Zusammensetzung nach Anspruch 1, **dadurch gekennzeichnet, dass** die genannten Verfahrenshilfsstoffe E in prozentualen Mengen zwischen 0 Gew.-% und 5 Gew.-% vorliegen.

7. Thermoplastische Zusammensetzung nach Anspruch 1 mit der folgenden Gewichtszusammensetzung: Komponente A 12,00 ± 1,0%, Komponente B 80 ± 5,0%, Komponente C 7,50 ± 1,0%, Komponente D 0,5 ± 0,1%.

8. Thermoplastische Zusammensetzung nach Anspruch 1 mit der folgenden Gewichtszusammensetzung: Komponente A 5,0 ± 0,5%, Komponente B 80 ± 5,0%, Komponente C 10 ± 1,0%, Komponente D 5,0 ± 0,5%.

9. Thermoplastische Zusammensetzung nach Anspruch 1 mit der folgenden Gewichtszusammensetzung: Komponente A 7,0 ± 1,0%, Komponente B 80 ± 5,0%, Komponente C 7,50 ± 1,0%, Komponente D 5,0 ± 0,5%, Komponente E 0,5 ± 0,1%.

10. Thermoplastische Zusammensetzung nach Anspruch 1 mit der folgenden Gewichtszusammensetzung: Komponente A 7,50 ± 1,0%, Komponente B 80 ± 5,0%, Komponente C 7,50 ± 1,0%, Komponente D 5,0 ± 0,5%.

11. Thermoplastische Zusammensetzung nach einem der vorigen Ansprüche, **dadurch gekennzeichnet, dass** das Verdichtungsmittel B ausgewählt ist aus
- Metalloxiden, ausgewählt unter solchen, die Elemente aufweisen, die zu den Gruppen II und IV des Periodensystems gehören, sowie zu Übergangsmetallen der Gruppen Ib, IIb und IIIb, IVb, Vb;
- Ferriten, ausgewählt unter solchen, die die Elemente Ba, Fe, Sr enthalten, mit magnetischen und paramagnetischen Eigenschaften; und
- Metallpulvern, ausgewählt unter Metallen, die zu den Gruppen II und IV des Periodensystems gehören, sowie zu Übergangsmetallen der Gruppen Ib, IIb und IIIb, IVb, Vb, unter Fe, Zn, Mg, Ti, W, Pb, Cr, Sb, Sn, Bi, Al.

12. Thermoplastische Zusammensetzung nach einem der vorigen Ansprüche, **dadurch gekennzeichnet, dass** das Verdichtungsmittel B ausgewählt ist aus
- Metalloxiden, ausgewählt aus Oxiden von Fe, Zn, Mg, Ti, W, Pb, Cr, Sb, Sn, Bi, Al; und
- Metallpulvern, ausgewählt unter Fe, Zn, Mg, Ti, W, Pb, Cr, Sb, Sn, Bi, Al,

13. Thermoplastische Zusammensetzung nach einem der vorigen Ansprüche, **dadurch gekennzeichnet, dass** das Verdichtungsmittel B Wolfram in Pulverform ist.

14. Thermoplastische Zusammensetzung nach einem der vorigen Ansprüche, **dadurch gekennzeichnet, dass** das Modifizierungsmittel C ein nicht-konjugiertes Ethylen/Propylen/Dien-Elastomer ist, welches mit Maleinsäureanhydrid modifiziert ist.

15. Thermoplastische Zusammensetzung nach einem der vorigen Ansprüche, **dadurch gekennzeichnet, dass** der Füllstoff und/oder das Verstärkungsmittel D Glasfaser ist,

16. Thermoplastische Zusammensetzung nach einem der vorigen Ansprüche, **dadurch gekennzeichnet, dass** der Verfahrenshilfsstoff E ein Gemisch aus Calciumstearat und einem sterisch behinderten Phenol ist.

17. Verwendung einer thermoplastischen Zusammensetzung nach einem der Ansprüche 1 bis 15 für die Herstellung akustischer Wandler.

18. Verwendung einer thermoplastischen Zusammensetzung nach einem der Ansprüche 1 bis 15 für die Herstellung akustischer Unterlagen.

19. Verwendung einer thermoplastischen Zusammensetzung nach einem der Ansprüche 1 bis 15 für die Herstellung von Unterlagen für akustische Ultraschallwandler.

## Revendications

1. Composition thermoplastique comprenant :
- au moins un polyamide A en une quantité entre 2 % et 75 % en poids ;
- au moins un agent densifiant B en une quantité entre 15 % et 95 % en poids, ledit agent étant choisi parmi les oxydes de métaux, les ferrites et les poudres métalliques ;
- au moins un agent modificateur C en une quantité entre 2 % et 60 % en poids, ledit agent étant sélectionné parmi les élastomères d'éthylène/propylène/diène non conjugués ;
- des charges et/ou des agents de renforcement D en une quantité entre 0 % et 60 % en poids ; et
- des auxiliaires de traitement E en une quantité entre 0 % et 10 % en poids.

2. Composition thermoplastique selon la revendication 1, **caractérisée en ce que** ledit polyamide A est présent en quantités en pourcentage de 3 % à 50 % en poids.

3. Composition thermoplastique selon la revendication 1, **caractérisée en ce que** ledit au moins un agent densifiant B est présent en quantités en pourcentage de 75 % à 85 % en poids.

4. Composition thermoplastique selon la revendication 1, **caractérisée en ce que** ledit au moins un agent modificateur C est présent en quantité en pourcentage de 2 % à 15 % en poids.

5. Composition thermoplastique selon la revendication 1, **caractérisée en ce que** lesdites charges et/ou lesdits agents de renforcement D sont présents en quantités en pourcentage de 0 % à 25 % en poids.

6. Composition thermoplastique selon la revendication 1, **caractérisée en ce que** lesdits auxiliaires de traitement E sont présents en quantités en pourcentage de 0 % à 5 % en poids.

7. Composition thermoplastique selon la revendication 1. ayant la composition en poids qui suit : composant A 12,00 ± 1,0 %, composant B 80 ± 5,0 %, composant C 7,50 ± 1,0%, composant D 0,5 ± 0,1 %.

8. Composition thermoplastique selon la revendication 1, ayant la composition en poids qui suit : composant A 5,0 ± 0,5 %, composant B 80 ± 5,0 %, composant C 10 ± 1,0 %, composant D 5,0 ± 0,5 %.

9. Composition thermoplastique selon la revendication 1, ayant la composition en poids qui suit : composant A 7,0 ± 1,0 %, composant B 80 ± 5,0 %, composant C 7,50 ± 1,0 %, composant D 5,0 ± 4,5 %, composant E 0,5 0,1 %.

10. Composition thermoplastique selon la revendication 1, ayant la composition en poids qui suit : composant A 7,50 ± 1,0%, composant B 80 ± 5,0 %, composant C 7,50 ± 1,0 %, composant D 5,0 ± 0,5 %.

11. Composition thermoplastique selon l'une quelconque des revendications précédentes, **caractérisée en ce que** ledit agent densifiant B est sélectionné parmi
- les oxydes de métaux sélectionnés parmi ceux qui ont des éléments appartenant au groupe II et au groupe IV du tableau périodique, et aux métaux de transition des groupes Ib, IIb et IIIb, IVb, Vb ;
- les ferrites sélectionnées parmi celles contenant des éléments de Ba, Fe, Sr, avec des propriétés magnétiques et paramagnétiques ; et
- les poudres métalliques sélectionnées parmi les métaux appartenant au groupe II et au groupe IV du tableau périodique, et les métaux de transition des groupes Ib, IIb et IIIb, IVb, Vb parmi les éléments Fe, Zn, Mg, Ti, W, Pb, Cr, Sb, Sn, Bi, Al.

12. Composition thermoplastique selon l'une quelconque des revendications précédentes, **caractérisée en ce que** ledit agent densifiant B est sélectionné parmi
- les oxydes métalliques sélectionnés parmi les oxydes de Fe, Zn, Mg, Ti, W, Pb, Cr, Sb, Sn, Bi, Al ; et
- les poudres métalliques sélectionnées parmi les éléments Fe, Zn, Mg, Ti, W, Pb, Cr, Sb, Sn, Bi, Al.

13. Composition thermoplastique selon l'une quelconque des revendications précédentes, **caractérisée en ce que** ledit agent densifiant B est du tungstène sous forme de poudre.

14. Composition thermoplastique selon l'une quelconque des revendications précédentes, **caractérisée en ce que** ledit agent modificateur C est un élastomère d'éthylène/propylène/diène non conjugué modifié à l'anhydride maléique.

15. Composition thermoplastique selon l'une quelconque des revendications précédentes, **caractérisée en ce que** ladite charge et/ou ledit agent de renforcement D est/sont des fibres de verre.

16. Composition thermoplastique selon l'une quelconque des revendications précédentes, **caractérisée en ce que** ledit auxiliaire de traitement E est un mélange de stéarate de calcium et de phénol à empêchement stérique.

17. Utilisation d'une composition thermoplastique selon l'une quelconque des revendications 1 à 15 pour la préparation de transducteurs acoustiques.

18. Utilisation d'une composition thermoplastique selon l'une quelconque des revendications 1 à 15 pour la préparation de supports acoustiques.

19. Utilisation d'une composition thermoplastique selon l'une quelconque des revendications 1 à 15 pour la préparation de supports pour transducteurs acoustiques à ultrasons.
